# EUROPÄISCHE PATENTSCHRIFT

(11) **EP 0 776 275 B1**
(45) Veröffentlichungstag und Bekanntmachung des Hinweises auf die Patenterteilung: **28.03.2001**
(21) Anmeldenummer: 96919592.4
(22) Anmeldetag: 29.05.1996
(51) Int. Cl.: B60G 9/00, B60G 7/00

(54) **ACHSAUFHÄNGUNG FÜR STARRACHSEN IN FAHRZEUGEN**
AXLE SUSPENSION FOR RIGID VEHICLE AXLES
SYSTEME DE SUSPENSION D'ESSIEU DESTINE AUX ESSIEUX RIGIDES DE VEHICULES

(30) Priorität: 16.06.1995 DE 19521874
(43) Veröffentlichungstag der Anmeldung: 04.06.1997
(60) Teilanmeldung: 00117760.9
(73) Patentinhaber: ZF Lemförder Metallwaren AG, 49448 Lemförde (DE)
(72) Erfinder: BUHL, Reinhard, D-49163 Bohmte (DE)
(86) Internationale Anmeldenummer: DE9600926
(87) Internationale Veröffentlichungsnummer: WO9700176

(56) Entgegenhaltungen:
- EP-A- 0 430 368
- DE-A- 2 416 202
- DE-A- 2 523 916
- DE-C- 758 202
- DE-C- 4 307 639
- DE-U- 9 218 307
- GB-A- 933 537
- US-A- 2 814 502
- PATENT ABSTRACTS OF JAPAN vol. 013, no. 305 (M-849), 13.Juli 1989 & JP,A,01 095919 (MAZDA MOTOR CORP), 14.April 1989,
- PATENT ABSTRACTS OF JAPAN vol. 010, no. 138 (M-480), 21.Mai 1986 & JP,A,60 261712 (DAIHATSU KOGYO KK), 25.Dezember 1985,
- PATENT ABSTRACTS OF JAPAN vol. 018, no. 319 (M-1623), 17.Juni 1994 & JP,A,06 072117 (HINO MOTORS LTD), 15.März 1994,
- PATENT ABSTRACTS OF JAPAN vol. 94, no. 010 & JP,A,06 286442 (HINO MOTORS LTD), 11.Oktober 1994,

## Beschreibung

Die Erfindung bezieht sich auf eine Achsaufhängung für Starrachsen in Fahrzeugen, insbesondere Nutzkraftfahrzeugen, nach dem Oberbegriff des Patentanspruches 1.

Bekannt sind Ausbildungsmerkmale entsprechend dem Oberbegriff des Patentanspruches 1 beispielsweise aus der DE 25 23 916 -B2-. In dieser Druckschrift wird eine Hinterachsaufhängung für Kraftfahrzeuge offenbart, bei der zur Achsführung zwei, sich im wesentlichen parallel zur Fahrzeuglängsrichtung erstreckende, untere Längslenker und zwei sich dazu ebenfalls parallel erstreckende obere Längslenker vorgesehen sind, wobei ein verdrehweich ausgebildetes Kupplungsglied über eine Schraubverbindung an den beiden oberen Längslenkern in Querrichtung montiert ist und die Lenker somit verbindet. Dieses Kupplungsglied ist mit den beiden oberen Längslenkern in einem geringen Abstand zu ihren vorderen Anlenkungen am Aufbau des Fahrzeuges angeordnet.

Darüber hinaus geht aus EP 0 430 368 A1 eine Achsaufhängung für ein Kraftfahrzeug mit Gasfederung hervor, die einen Mehrfachlenker aufweist, der einerseits mit der Fahrzeugachse und andererseits mit dem Fahrzeugaufbau gelenkig verbunden ist und seitlichen Wank- und Kippbewegungen entgegenwirkt. Dieser Mehrfachlenker ist als Hohlkörper aus Blech hergestellt. Die Herstellung eines derartigen Bauelementes ist sehr aufwendig und damit kostenintensiv. Weiterhin sind bei der Verwendung von Blech als Grundmaterial Festigkeitsanforderungen nur begrenzt realisierbar.

Aus JP 64-237718 ist weiterhin eine Achsaufhängung bekannt, bei der einerseits unterhalb der Fahrzeughinterachse zwei Längslenker über Molekulargelenke angelenkt und diese Lenker andererseits am Fahrzeugaufbau befestigt sind. Zusätzlich werden in dieser bekannten Ausführungsform etwa achsmittig zwei über eine Querstrebe verbundene Längslenker angeordnet. Nachteilig ist bei einer derartigen Achsaufhängung jedoch, daß die Wankneigung des Fahrzeuges um die Fahrzeugquerachse nicht hinreichend ausgeglichen werden kann. Durch die mittig angeordnete Querstrebe zwischen den Längslenkern ist eine solche Ausführung verdrehweich und vermag keine hinreichende Querstabilität zu gewährleisten.

Der Erfindung liegt die Aufgabe zugrunde, eine verbesserte Gestaltung einer Achsaufhängung zu schaffen, beider größere Kräfte und Drehmomente aufgesommen werden Rönnen.

Gelöst wird diese Aufgabe bei einer Achsführung nach dem Oberbegriff des Patentanspruches 1 durch Ausbildungsmerkmale nach dem kennzeichnenden Teil des

Patentanspruches 1.
Ausgestaltungen der Erfindung sind Gegenstand der Unteransprüche.

Erreicht wird durch diese Ausbildungsmerkmale eine Integration der Elemente zur Achsführung und der Elemente zur Querstabilisierung des Fahrzeugaufbaus gegenüber der Fahrzeugachse in einem Bauteil.
Ein besonderer Vorteil der erfindungsgemäßen Ausbildung liegt in der Möglichkeit der Substitution bereits eingebauter Achsführungselemente durch eine erfindungsgemäß ausgebildete Achsaufhängung unter Verwendung der am Fahrzeugaufbau und an der
Fahrzeugachse vorhandenen Lagerelemente.
Darüber hinaus ist es bei einer erfindungsgemäßen Ausführungsform einer Achsaufhängung möglich, die Wankstabilität sehr genau zu bestimmen, wobei gegenüber bekannten Ausführungen größere Kräfte und Drehmomente aufgenommen werden können.
Gesonderter Bauraum für die Lagerung eines Stabilisatorstabes ist nicht mehr erforderlich.
Es entfallen die Lagerelemente für den Stabilisatorstab an der Fahrzeugachse und auch am Fahrzeugaufbau. Damit einhergehend ist die erfindungsgemäße Achsaufhängung gegenüber bekannten Ausbildungen kostensparend, weil sie weniger Einzelteile aufweist und weniger Montagearbeit erfordert.
Es ergeben sich aber auch Funktionsvorteile. Die Stabilisierungseinrichtung, die bei Ausführungen nach dem Stand der Technik beispielsweise ein Stabilisatorstab ist, befindet sich unmittelbar zwischen den Längslenkern für die Achsführung und ist mit diesen durch an sich bekannte, reibungsarme Lagerelemente drehfest, quer zur Fahrzeuglängsrichtung jedoch kardanisch beweglich, verbunden.

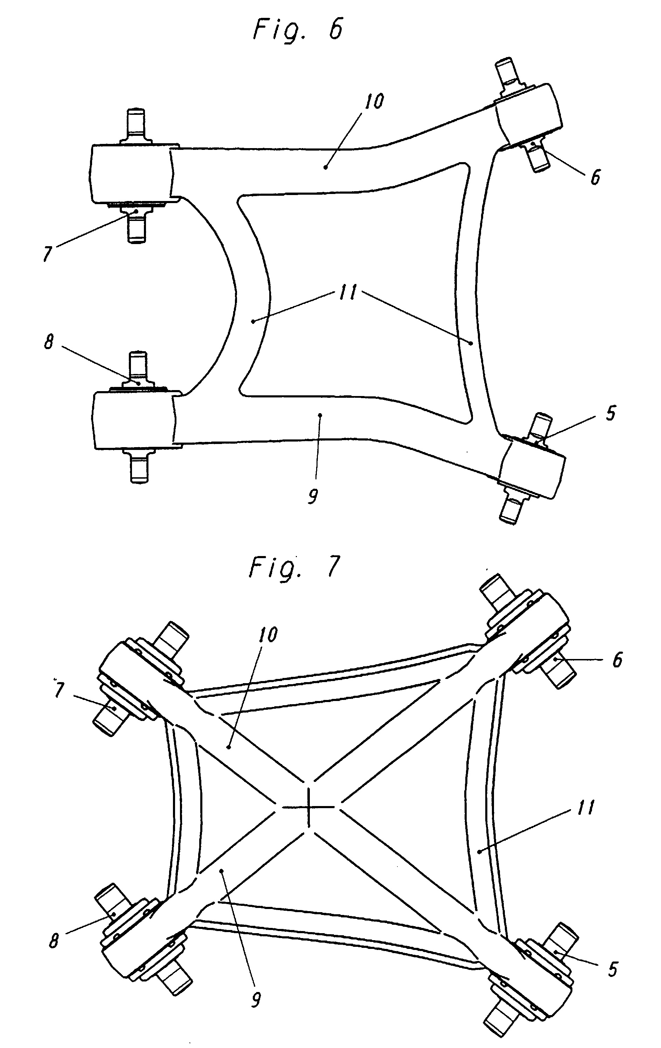

In den Figuren 5 und 7 sind Ausführungsbeispiele der Erfindung dargestellt. Es zeigen:
**Figur 1:** eine Draufsicht auf ein erstes Beispiel, das das Verständnis der Erfindungerleichtert,
**Figur 2:** eine Seitenansicht der Anordnung nach Figur 1,
**Figur 3:** eine im Vergleich zu Figur 1 im Maßstab vergrößerte Ansicht des Vierpunktlenkers und
**Figuren 5 und 7:** Draufsichten auf Ausführungsbeispiele für die Gestaltung des Vierpunktlenkers.

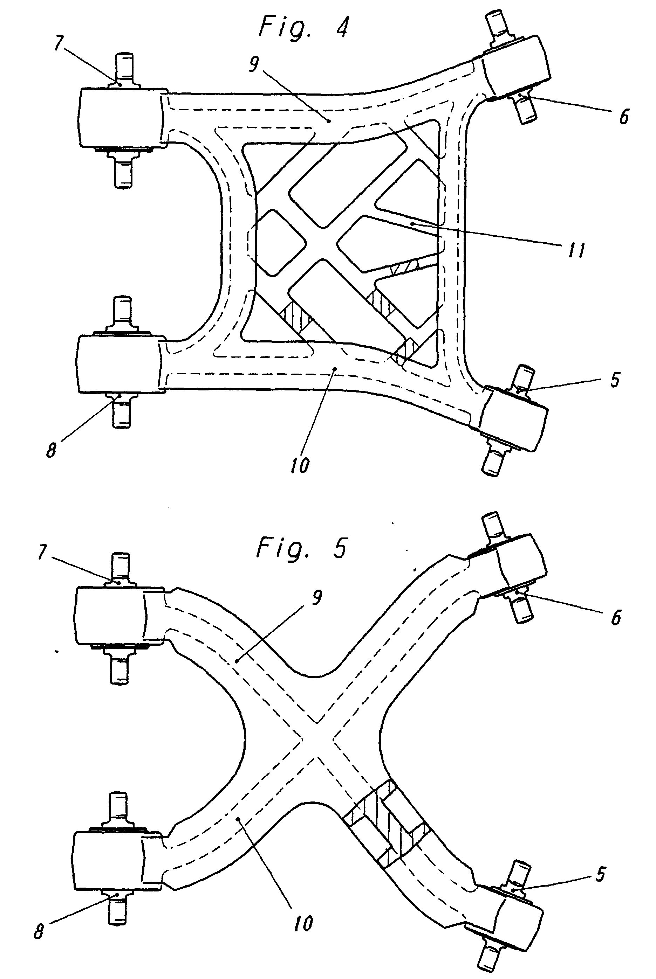

Figuren 4,6,8-10: Draufsichten auf andere Beispiele für die Gestaltung eines Vierpunktlenkers, die nicht Aufsführungsarten der Erfindung sind.

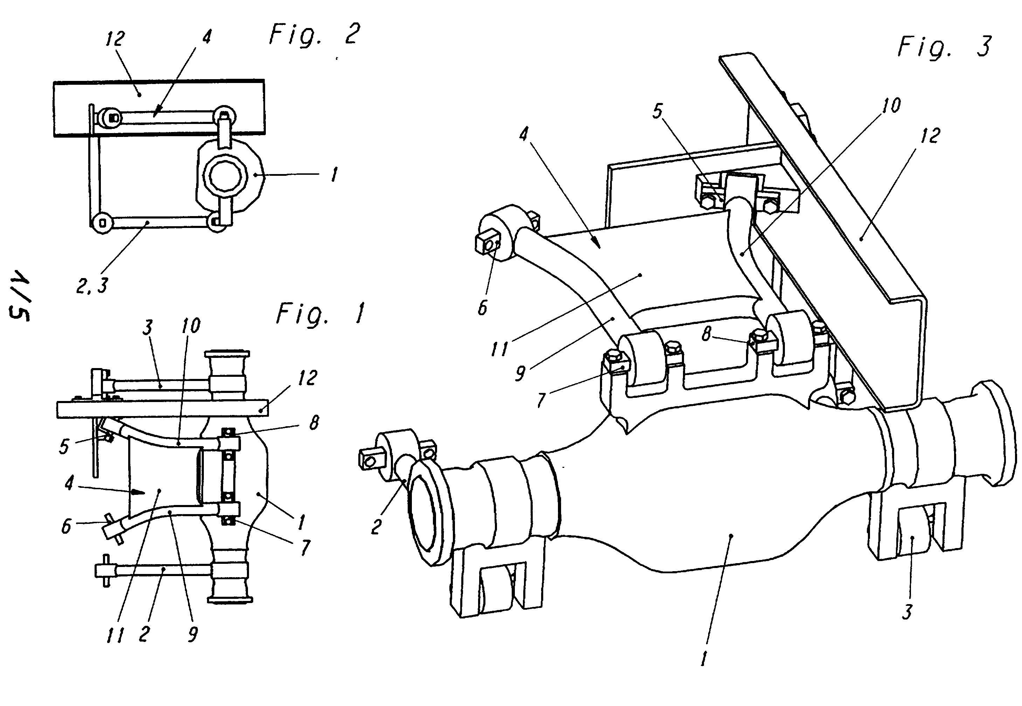

In den Ausführungsbeispielen ist die Fahrzeugachse 1 an beiden Fahrzeugseiten mit einem erheblichen Abstand von der Längsmitte des Fahrzeuges durch Längslenker 2 und 3 und in der Fahrzeugmitte durch einen in der Höhenlage dazu versetzt angeordneten Vierpunktlenker 4 mit dem Fahrzeugaufbau verbunden. Der Fahrzeugaufbau ist in den Figuren 1-3 bereichsweise schematisch dargestellt. In den Figuren 1-3 wird aus Gründen der besseren Übersichtlichkeit die nur die einseitige Anbindung des Vierpunktlenkers an den Fahrzeugrahmen 12 gezeigt. Die Gelenkverbindungen der Längslenker 2 und 3 befinden sich unterhalb der Fahrzeugachse 1, während der Vierpunktlenker 4 oberhalb der Fahrzeugachse 1 in einem gegenüber den Längslenkern 2 und 3 unterschiedlichen Höhenniveau angeordnet ist. Alle Gelenkverbindungen sind kardanisch beweglich ausgeführt und bestehen vorzugsweise aus Kugelgelenken.

Der Vierpunktlenker 4 in den Beispielen der Figuren 1 bis 3 besteht aus zwei stabilen Gelenkarmen 9 und 10, die durch ein Flächentragwerk 11 fest miteinander verbunden sind, welches verwindbar ausgeführt ist, wobei die Verwindung einer definierten Kennlinie unterliegt. Die aus den Gelenkarmen 9 und 10 mit dem Flächentragwerk 11 gebildete Rahmenkonstruktion ist mit an den einen Enden der Gelenkarme 9 und 10 befestigten Gelenken 5 und 6 an der Fahrzeugkarosserie befestigbar und wird mit den an den anderen Enden der Gelenkarme 9 und 10 angeordneten Gelenken 7 und 8 an der Fahrzeugachse 1 bzw. an einem mit der Fahrzeugachse verbundenen Stützkörper 1.1 befestigt. Diese Ausbildung des Vierpunktlenkers 4 ermöglicht Pendelbewegungen der Fahrzeugachse 1 gegenüber der Fahrzeugkarosserie quer zur Fahrtrichtung. Die dabei auftretende Verwindung des Flächentragwerks ruft durch Torsionsspannungen Rückstellkräfte für die Wiederherstellung der Nullage hervor.
Wie in Figur 3 dargestellt, kann das Flächentragwerk im einfachsten Falle eine in sich geschlossenen plattenförmige Verbindung sein. Eine derartige Ausführung ist besonders einfach herstellbar und damit sehr kostengünstig. Darüber hinaus läßt sich hierbei der Drehmomentenverlauf innerhalb des Flächentragwerkes exakt bestimmen, sodaß eine den Belastungsverhältnissen genau angepaßte konstruktive Auslegung möglich ist.

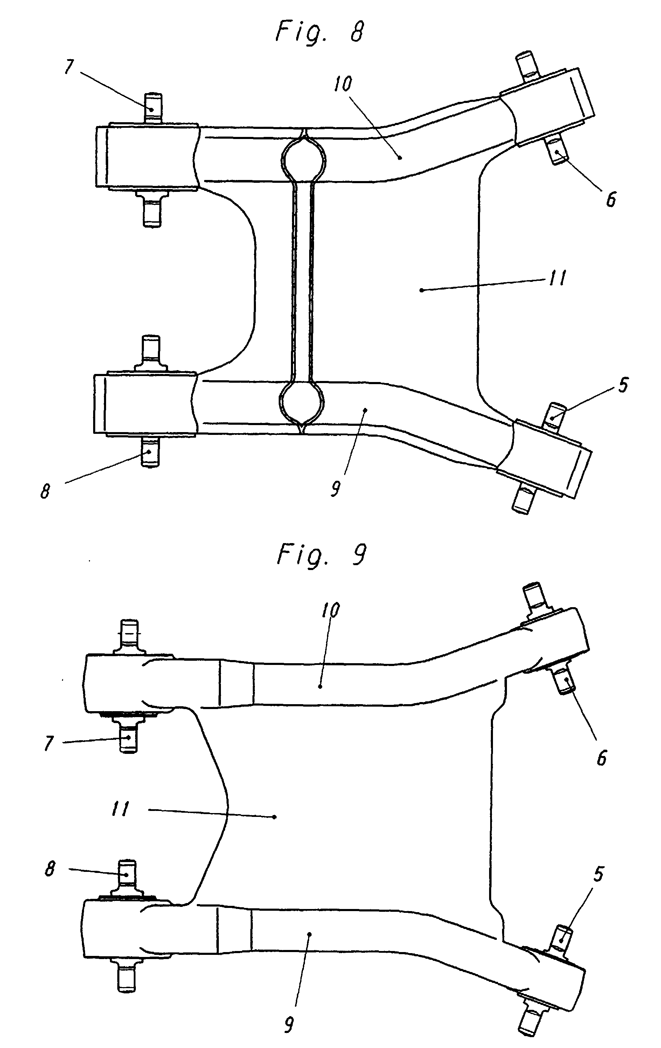

Die Figuren 4 bis 10 zeigen unterschiedliche Ausbildungen des Vierpunktlenkers 4. Die Gelenkarme 9 und 10 sind bei dem Beispiel nach der Figur 4 in ein Flächentragwerk aus unterschiedlich angeordneten Streben integriert, wobei die Lage der Streben und deren Querschnittsgestaltung ebenfalls eine ziemlich genaue Definierung der Kennlinie der sich bei der Verwindung des Flächentragwerks aufbauenden Rückstellkräfte ermöglicht. Die Gelenke zur Befestigung des Vierpunktlenkers einerseits an der Fahrzeugachse und andererseits an der Karosserie sind an den Enden der Gelenkarme 9 und 10 angeordnet. Die Figuren 6 und 8 geben Draufsichten eines Vierpunktlenkers wieder, bei dem die Gelenkarme 9 und 10 durch im wesentlichen geschlossene Flächentragwerke miteinander verbunden sind. Dieses Flächentragwerk ist in der Figur 6 durch Randverstärkungen zusätzlich versteift und bildet somit ein Rahmenprofil. Die Figuren 4-10 zeigen ferner die Möglichkeit der Anordnung von Ausschnitten in einem in sich geschlossenen Flächentragwerk zur Beeinflussung der Kennlinie der sich bei der Verwindung aufbauenden Rückstellkräfte. Bei dem Ausführungsbeispiel in Figur 7 sind die beiden Gelenkarme in sich kreuzender Lage angeordnet und bilden somit Rippen auf einem an den Rändern ebenfalls Verstärkungen aufweisenden Flächentragwerk. Ein vergleichbares Ergebnis läßt sich auch mit einem Vierpunktlenker in X-förmiger Draufsicht entsprechend der Darstellung in Figur 5 erreichen. An den Armenden des X-förmigen Kreuzes sind die Gelenke 5 und 6 für die Befestigung an der Karosserie und die Gelenke 7 und 8 für die Befestigung an der Fahrzeugachse angeordnet. Das Querschnittsprofil der Arme wird den Gegebenheiten angepaßt und kann beispielsweise doppel-T-förmig sein, wie es in der Zeichnungsfigur angedeutet ist, oder aus einem Hohlprofil bestehen. Hierfür sind unterschiedliche Materialien einsetzbar.

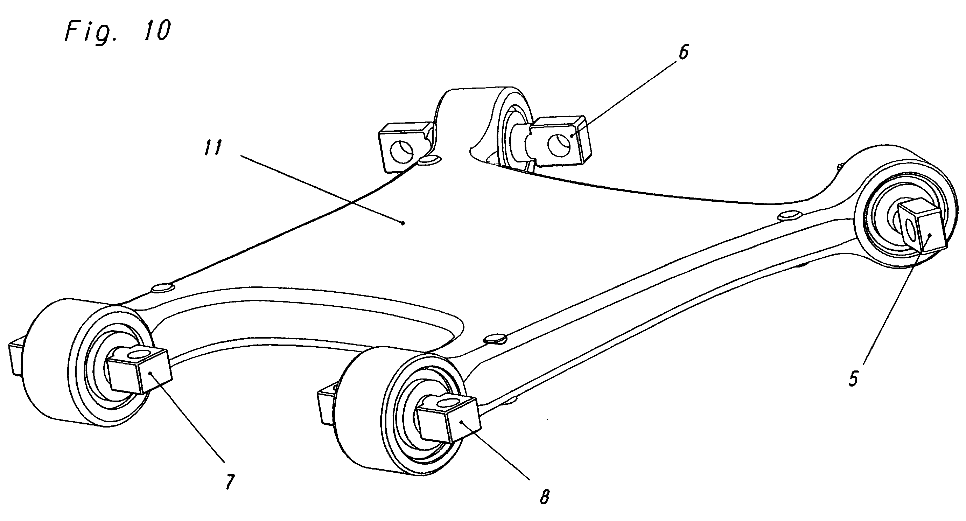

In der Figur 8 ist zwischen den Gelenkarmen 9 und 10 eine mögliche Profilierung des Vierpunktlenkers eingezeichnet, der in dem gezeigten Beispiel ein Hohlprofil ist. Entsprechend Figur 10 können die Lenkerarme auch vollständig in dem Vierpunktlenker aufgehen, sodaß, wie hier gezeigt, ein in sich geschlossenes, einteiliges Bauteil entsteht. Das Flächentragwerk 11 ist entsprechend Figur 10 als ebene Fläche gestaltet. Es ist sehr vorteilhaft, einen derart gestalteten Vierpunktlenker als Hohlprofil auszubilden. Somit ergibt sich eine erhebliche Gewichtsersparnis.

### BEZUGSZEICHENLISTE:

- 1: Fahrzeugachse
- 1.1: Stützkörper
- 2: Längslenker
- 3: Längslenker
- 4: Vierpunktlenker
- 5: Gelenk
- 6: Gelenk
- 7: Gelenk
- 8: Gelenk
- 9: Gelenkarm
- 10: Gelenkarm
- 11: Flächentragwerk
- 12: Fahrzeugrahmen

## Patentansprüche

1. Achsaufhängung für Starrachsen in Fahrzeugen, insbesondere Nutzfahrzeugen, bei der zur Achsführung auf jeder Fahrzeugseite etwa auf gleicher Höhe wenigstens ein sich in Fahrzeuglängsrichtung erstreckender, die Fahrzeugachse (1) mit dem Fahrzeugaufbau vertikal beweglich verbindender Längslenker (2,3) eines Längslenkerpaares und davon in der Höhenlage abweichend ein Vierpunktlenker, welcher in jeweils zwei in Fahrzeugquerrichtung einen Abstand voneinander aufweisenden Gelenken (5,6),(7,8) einerseits mit der Fahrzeugachse (1) und andererseits mit dem Fahrzeugaufbau verbunden ist sowie eine seitlichen Wank- und Kippbewegungen durch Torsionsspannungen entgegenwirkende Stabilisierungseinrichtung vorgesehen ist,
dadurch gekennzeichnet, daß
der Vierpunktlenker (4) als ein verwindbares Kreuz mit definierter Verwindungs-Kennlinie ausgebildet ist, von dem zwei Kreuzarme durch Kugelgelenke (5,6) mit dem Fahrzeugaufbau und zwei Kreuzarme durch Kugelgelenke (7,8) mit der Fahrzeugachse (1) verbunden sind.

2. Achsaufhängung nach Anspr. 1, dadurch gekennzeichnet daß Zusätzlich ein Rahmenprofil aufweist der Vierpunktlenker (4).

3. Achsaufhängung nach einem der Ansprüche 1 oder 2, dadurch gekennzeichnet, daß der Vierpunktlenker (4) oberhalb der Fahrzeugachse (1) an diese angelenkt ist.

## Claims

1. Axle suspension for rigid axles in vehicles, particularly utility vehicles, in which there are provided, for the purpose of guiding the axle at approximately the same height on each side of the vehicle, at least one longitudinal link (2, 3) which belongs to a pair of longitudinal links and connects the vehicle axle (1) to the vehicle body in a vertically movable manner and, in a manner differing from the said link in its vertical location, a four-point link which is connected, on the one hand, to the vehicle axle (1) and, on the other, to the vehicle body in two joints (5, 6), (7, 8), in each case, which are at a distance from one another in the transverse direction of the vehicle, and also a stabilising apparatus which counteracts lateral rocking and tilting movements by torsional stresses, characterised in that
the four-point link (4) is constructed as a twistable cross with a defined twisting characteristic, of which two arms of the cross are connected to the vehicle body by ball joints (5, 6) and two arms of the cross are connected to the vehicle axle (1) by ball joints (7, 8).

2. Axle suspension according to claim 1, characterised in that the four-point link (4) additionally has a frame profile.

3. Axle suspension according to one of claims 1 or 2, characterised in that the four-point link (4) is articulatingly attached to the vehicle axle (1) above the latter.

## Revendications

1. Suspension d'essieu, pour essieu rigide de véhicule, notamment de véhicule utilitaire, dans laquelle, pour le guidage de l'essieu sur chaque côté du véhicule, il est prévu, approximativement à la même hauteur, au moins un bras oscillant longitudinal (2, 3) d'une paire de bras oscillants longitudinaux, qui s'étend suivant la direction longitudinale du véhicule et qui relie l'essieu de véhicule (1) à la caisse de véhicule d'une manière mobile verticalement et, s'écartant de celui-ci en position en hauteur, un bras oscillant à quatre points qui est relié d'une part à l'essieu de véhicule (1) et d'autre part à la caisse de véhicule au moyen, pour chacun de ceux-ci, de deux articulations respectives (5, 6), (7, 8) présentant une certaine distance l'une vis-à-vis de l'autre suivant la direction transversale du véhicule, ainsi qu'un dispositif de stabilisation s'opposant à des déplacements de roulis et de renversement latéraux sous l'effet de contraintes de torsion,
caractérisée en ce que le bras oscillant à quatre points (4) est réalisé sous forme d'une croix flexible en torsion présentant une caractéristique définie de torsion dont deux bras de croix sont reliés à la caisse de véhicule au moyen d'articulation à rotule (5, 6) et deux bras de croix sont reliés à l'essieu de véhicule (1) au moyen d'articulations à rotule (7, 8).

2. Suspension d'essieu suivant la revendication 1, caractérisée en ce que le bras oscillant à quatre points (4) comporte en supplément un élément profilé de châssis.

3. Suspension d'essieu suivant l'une des revendications 1 ou 2, caractérisée en ce que le bras oscillant à quatre points (4) est articulé à l'essieu de véhicule (1) au-dessus de celui-ci.
